# EUROPEAN PATENT APPLICATION

(11) **EP 4 596 319 A1**
(43) Date of publication of application: **06.08.2025**
(21) Application number: 24164104.2
(22) Date of filing: 18.03.2024
(51) Int. Cl.: B60P 1/28

(54) **HOPPER, TIPPER TRUCK AND TIPPER TRAILER**

(30) Priority: 31.01.2024 IN 202441006316
(71) Applicant: SSAB Technology AB, 101 21 Stockholm (SE)
(72) Inventor: Gopinath, Pavan, 560024 Bengaluru, Karnataka (IN)
(74) Representative: Papula Oy

(57) **Abstract**

A hopper for a tipper truck or tipper trailer, a tipper truck and a topper trailer. The hopper (100) comprises a canopy part (1), a hopper part (2), and a headboard beam (3) between the canopy part (1) and the hopper part (2). The headboard beam (3) is arranged to constitute a wall (4) that raises above an upper surface (5) of the canopy part between the canopy part (1) and the hopper part (2) .

## Description

### BACKGROUND

The invention relates to a hopper for a tipper truck or tipper trailer.

The invention further relates to a tipper truck.

The invention still further relates to a tipper trailer.

During loading of tippers, an excavator operator tends to load material on the canopy to achieve maximum utilization of tipper body volume during heap loading. This leads to increased fatigue on canopy structures and on its welds. Further, during return trips, when the tipper is empty, there are vibrations in the canopy caused by vibration loads (G-loads). The vibration loads are increased due to a heavy structure of the canopy, which needs to be designed to carry material loaded thereon. Due to the vibrations and the canopy self-weight, the structure of the canopy experiences high stress and fatigue. This will lead to the canopy being broken down sooner or later. This is a problem especially for heavy-duty tippers, such as mining tippers. A broken canopy has to be repaired, and for that purpose at least the hopper, often the whole tipper truck, has to be taken out from work, sometimes for a long time. This causes increased maintenance costs as such and reduces working efficiency of the hopper or the tipper truck.

### BRIEF DESCRIPTION

Viewed from a first aspect, there can be provided a hopper for a tipper truck or tipper trailer, comprising a canopy part, a hopper part, and a headboard beam between the canopy part and the hopper part, wherein the headboard beam is arranged to constitute a wall that raises above an upper surface of the canopy part between the canopy part and the hopper part.

This makes it possible to provide a canopy part with a lower weight, which leads to a canopy part that is less prone to high stress and fatigue. In addition, loading on the canopy can be avoided, which in turn may provide a better load distribution on rigid truck axles and avoid overloading of front axles.

Viewed from a further aspect, there can be provided a tipper truck comprising the hopper according to the first aspect.

Thereby a tipper truck having a reduced need for maintenance as well as a high working efficiency may be achieved.

Viewed from a still further aspect, there can be provided a tipper trailer comprising the hopper according to the first aspect.

Thereby a tipper trailer having a reduced need for maintenance as well as a high working efficiency may be achieved.

The arrangement and the method are characterised by the independent claims. Further embodiments are characterised in the dependent claims. Inventive embodiments are also disclosed in the specification and drawings of this patent application. Features of the different embodiments of the invention may, within the scope of the basic inventive idea, be applied to other embodiments.

Various embodiments of the first aspect may comprise at least one feature from the following paragraphs:
In one embodiment, the canopy part is fixedly attached to the hopper part.

An advantage is that a robust structure of the hopper may be achieved.

In one embodiment, the canopy part is detachably attached to the hopper part.

An advantage is that the canopy can be easily and quickly changed in case it has been damaged. Further, there are less welds, which are prone to fatigue breakdown. Still further, the canopy part may have a lower weight.

In one embodiment, the headboard beam is an integral part of the hopper part, and the canopy part is attached to the headboard beam.

An advantage is that the canopy part can be replaced without the headboard beam.

In one embodiment, the canopy part comprises a transverse flange that is arranged in the transverse direction and at an angle to the upper surface, and wherein the transverse flange is detachably attached to the headboard beam.

An advantage is that a large fixing area for fastening devices may be provided.

In one embodiment, the canopy part comprises longitudinal flanges arranged on both sides thereof, wherein the longitudinal flanges are detachably attached to the hopper part.

An advantage is that stresses from the canopy part may be distributed more evenly to the hopper part, and thus a more robust structure of the hopper may be achieved.

In one embodiment, the longitudinal flanges are detachably attached to the headboard beam.

An advantage is that loads focusing on the canopy part may be transferred to the headboard beam having a robust structure.

In one embodiment, the headboard beam is integrated with the canopy part such that it is detachable together with said canopy part from the hopper part.

An advantage is that the headboard beam can be easily and quickly detached from the hopper part in case it has been damaged.

In one embodiment, the hopper comprises a vertically disposed beam arranged to an outer side of a front section of the hopper part, and a support leg arranged to an underside of the canopy part, wherein the support leg is detachably attached to the vertically disposed beam.

An advantage is that the support of the canopy part can be added in such a way that it withstands high stresses caused by material loaded on to the canopy.

In one embodiment, the canopy part is attached to the hopper part by bolts.

An advantage is that attachment and detachment of the canopy part can be performed with commonly used tools.

In one embodiment, the headboard beam extends 50 mm - 1000 mm above the upper surface of the canopy part.

An advantage is that any material ending up on the canopy while loading the hopper is effectively prevented to enter in the hopper.

In one embodiment, the headboard beam extends from a first side to a second side of the hopper part.

An advantage is that any material ending up on the canopy while loading the hopper is effectively prevented to enter in the hopper.

In one embodiment, the upper surface of the canopy part has a sloping surface arranged to slope towards at least one side edge of the canopy. Preferably sloping surfaces are arranged to slope towards both side edges of the canopy.

An advantage is that any material ending up on the canopy while loading the hopper may slide away, and thus stresses caused by said material and focused to the canopy part, e.g., during transportation of material, may be reduced.

Based on the above, it should be noted that the different embodiments mentioned in the above paragraphs may be combined in any possible suitable manner for implementing the present invention.

### BRIEF DESCRIPTION OF FIGURES

Some embodiments illustrating the present disclosure are described in more detail in the attached drawings, in which
Figure 1 is a schematic view of a part of a hopper,
Figure 2 is an overall schematic view of the hopper shown in Figure 1,
Figure 3 is a schematic view of the canopy shown in Figure 1 from underside thereof,
Figure 4 is another schematic view of the canopy shown in Figure 1 from underside thereof,
Figure 5 is a schematic side view of a truck comprising a hopper and
Figure 6 is a schematic side view of a tipper trailer.

In the figures, some embodiments are shown simplified for the sake of clarity. Similar parts are marked with the same reference numbers in the figures.

### DETAILED DESCRIPTION

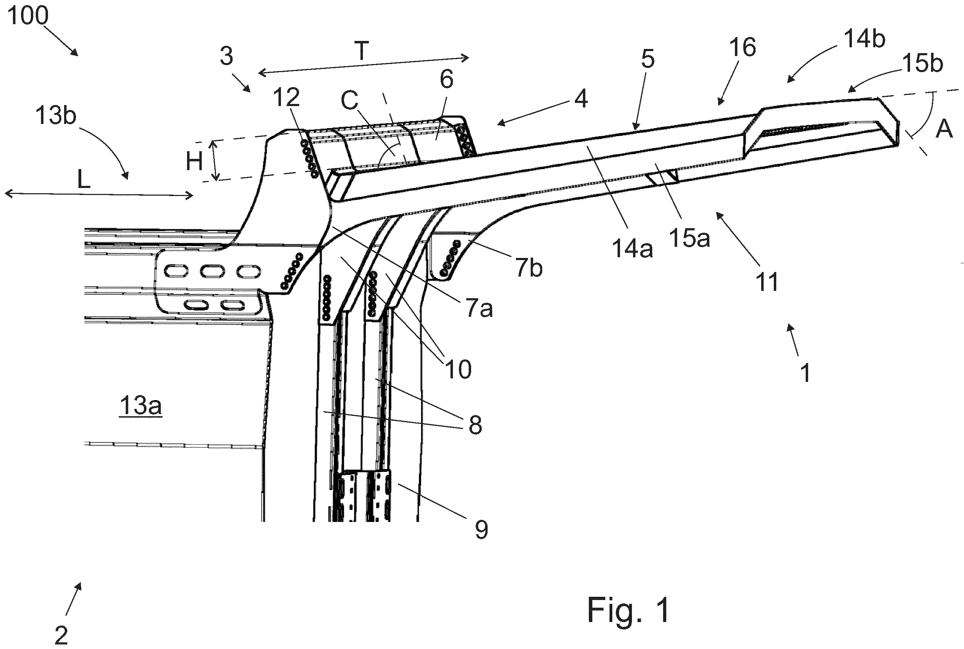

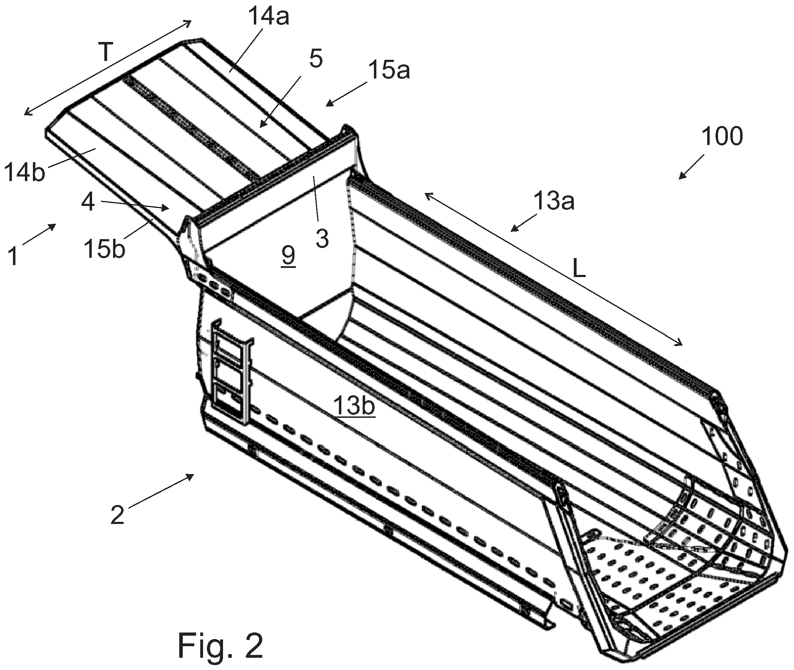

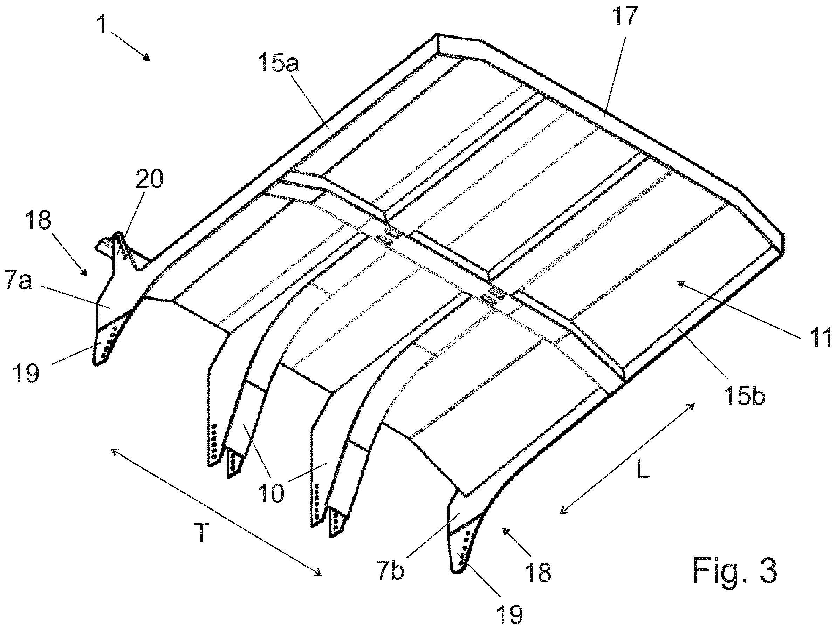

**Figure 1** is a schematic view of a hopper, **Figure 2** is another schematic view of the hopper shown in Figure 1, and **Figures 3** and **4** are schematic views of the canopy shown in Figure 1 from underside thereof.

The hopper 100 comprises a canopy part 1, a hopper part 2, and a headboard beam 3 arranged in a transverse direction T between the canopy part 1 and the hopper part 2. The headboard beam 3 is arranged to form a wall 4 that raises above an upper surface 5 of the canopy part between the canopy part 1 and the hopper part 2.

In one embodiment, such as shown in Figures 1 and 2, the canopy part 1 is detachably attached to the hopper part 2. The canopy part 1 may be attached to the hopper part 2 by a plurality of fastening devices, e.g., bolts 12 or rivets.

In one embodiment, such as shown in Figures 1 and 2, the headboard beam 3 is an integral part of the hopper part 2. In other words, the headboard beam 3 is a part of the hopper part 2 to which the canopy part 1 is attached.

In one embodiment, the headboard beam 3 extends from a first side 13a to a second side 13b of the hopper part. In other words, the length of the headboard beam 3 in a transverse direction T of the hopper corresponds the width of the hopper part 2.

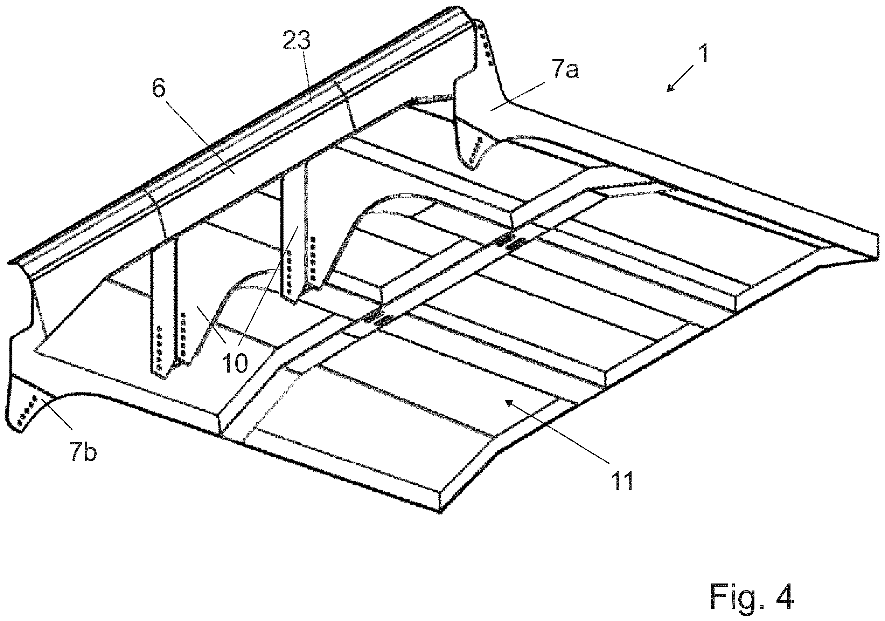

In one embodiment, the canopy part 1 is attached to the headboard beam 3 by a transverse flange 6 that is provided in the canopy part 1 and arranged in the transverse direction T. The transverse flange 6 is shaped so that it fits to the headboard beam 3. In one embodiment, the transverse flange 6 has a top part 23, such as best shown in Figure 4, that fits on top of the transverse flange. In one embodiment, the transverse flange 6 has a continuous shape over its entire length, such as shown in the Figures. In another embodiment, the shape of the transverse flange 6 is not same over its entire length but may comprise, e.g., one or more discontinuing sections.

In one embodiment, the wall 4 created by the headboard beam 3 on the side of the canopy part extends a height H that is selected in range of 50 mm -1000 mm from the upper surface 5 of the canopy part. Further, the wall 4 makes a wall angle C with the upper surface 5. In one embodiment, said wall angle C is in range of 20° - 135°.

In one embodiment, in addition to the transverse flange 6, the canopy part is attached to the hopper part 2 by longitudinal flanges 7a, 7b. In one embodiment, the longitudinal flanges 7a, 7b are connected to the transverse flange 6 and extends therefrom to a tip 17 of the canopy part. The longitudinal flanges 7a, 7b attach to the hopper part 2 at an attaching end 18. In one embodiment, the attaching end 18 comprises at least one extension that provides room for a plurality of fastening devices, such as bolts 12.

In one embodiment, the attaching end 18 comprises a lower extension 19 that extends downwards and an upper extension 20 that extends upwards from the side edge 15a, 15b. In the embodiment shown in Figures 1-4, the extensions 19, 20 have a planar shape and are parallelly directed. In other embodiments, however, the the the extensions 19, 20 may have different shapes and directions, depending on, e.g., the shape and structure of the hopper part.

In one embodiment, at least one vertically disposed beam 8 is arranged to an outer side of a front section 9 of the hopper part. The embodiment shown in Figure 1 has two vertically disposed beams 8 arranged symmetrically in relation to the front section 9. In some embodiments, there may be more than two vertically disposed beams 8. In one embodiment, the vertically disposed beam 8 is not positioned exactly vertically, but its direction deviates from vertical direction in some extent, while still adapting a more vertical than horizontal position.

One or more support legs 10 are arranged to an underside 11 of the canopy part and are detachably attached to the vertically disposed beam(s) 8 of the hopper part. A plurality of fastening devices, such as bolts 12, are used to attach the support legs 10. In one embodiment, such as shown in the Figures, the support leg 10 comprises two lugs, and the vertically disposed beam 8 is attached between said lugs. The support legs 10 have a shape, size and position selected so that that fastening to the corresponding vertically disposed beam(s) 8 is uncomplicated.

In one embodiment, the upper surface 5 of the canopy part has a sloping surface 14a, 14b that is arranged to slope towards at least one side edge 15a, 15b of the canopy. In one embodiment, such as shown in the Figures, the upper surface 5 has two sloping surfaces 14a, 14b. A first surface that is sloping towards a first side edge 15a and second surface that is sloping towards a second side edge 15b of the canopy. In one embodiment, the sloping surface 14a, 14b has a straight profile that makes a sloping angle A with the horizontal. The sloping angle A is selected, e.g., in range of 15° - 25°. It is to be noted, however, that the sloping surface 14a, 14b may have another profile, for instance curved or stepwise changing sloped profile.

In one embodiment, such as shown in the Figures, the upper surface 5 of the canopy part comprises a middle section 16 arranged between two sloping surfaces 14a, 14b. This middle section does not slope towards the side edges 15a, 15b, but its profile is arranged horizontally. It is to be noted, however, that there are many alternatives to design the profile and shape of the upper surface 5 of the canopy part. In one embodiment, two straight sloping surfaces 14a, 14b meet at the upper surface 5, i.e., the upper surface has a shape that resembles a ridged roof shape.

In the above description, the headboard beam 3 is an integrated part of the hopper part 2, and the canopy part 1 is detachably attached to said hopper part by fastening devices, such as bolts.

In one embodiment, the headboard beam 3 is integrated with the canopy part 1 such that it is attached to, and detached from, the hopper part 2 together with said canopy part. In other words, the headboard beam 3 is a part of the canopy part 1.

In one embodiment, the canopy part 1 is not detachably attached to the hopper part 2 by, e.g., plurality of fastening devices, such as bolts, but the canopy part 1 and the hopper part 2 are fixedly attached to each other by, e.g., weldings.

Structures and elements of the canopy part 1 and the hopper part 2 are constructed of suitable material. In one embodiment, the canopy part 1 and the hopper part 2 are made of the same material. In another embodiment, the material(s) of the canopy part differs from the material (s) of the hopper part due to, e.g., optimization reasons.

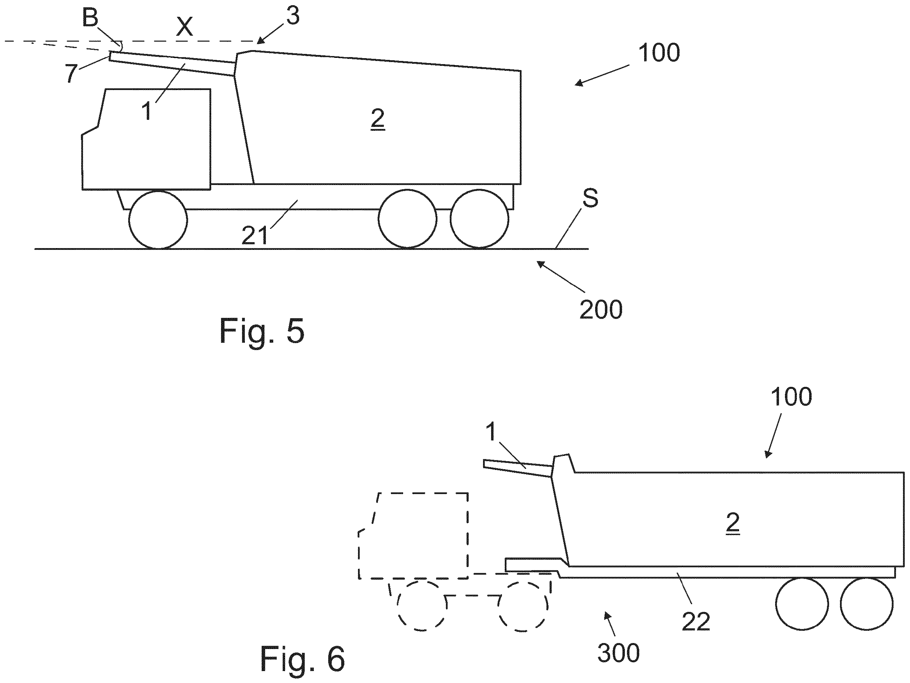

**Figure 5** is a schematic side view of a truck 200 comprising a hopper. The hopper 100 has the structure described in this description. The hopper 100 is arranged on the chassis 21 of the truck with, e.g., a motor, a tipping device for tipping the hopper, and a cabin of said truck.

Figure 5 is showing a canopy angle B, that is the angle between the upper surface 5 of the canopy and the horizontal X when the truck is on a horizontal surface S. In one embodiment, said canopy angle B is selected in range of 0° - 30°, so that the upper surface 5 is parallel with the horizontal or raises towards the tip 7. In one embodiment where the upper surface raises towards the tip 7, said tip is positioned on a higher horizontal level than an upper edge of the headboard beam 3. In one embodiment, the tip is up to 300 mm higher than the upper edge of the headboard beam 3.

In another embodiment where the upper surface 5 raises towards the tip 7, the tip lies on a lower horizontal level than said upper edge of the headboard beam 3, or alternatively, the tip lies at the same horizontal level as said upper edge of the headboard beam. In one embodiment, the tip is 0 mm - 100 mm lower than the upper edge of the headboard beam 3.

In one embodiment, which is shown in Figures 1-4, the headboard beam 3 is arranged to raise above the upper edges of the side edges 15a, 15b. In another embodiment, such as shown in Figure 5, said upper edges, or their highest point, and the headboard beam 3 lie on the same horizontal level.

**Figure 6** is a schematic side view of a tipper trailer 300 comprising a hopper. The hopper 100 has the structure described in this description. The hopper 100 is arranged on a trailer chassis 22 that comprises, e.g. a tipping device for tipping the hopper and a coupling device for coupling the tipper trailer 300 to a tractor unit or truck.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: canopy part
- 2: hopper part
- 3: headboard beam
- 4: wall
- 5: upper surface
- 6: transverse flange
- 7a,b: longitudinal flange
- 8: vertically disposed beam
- 9: front section
- 10: support leg
- 11: underside
- 12: bolt
- 13a,b: side
- 14a,b: sloping surface
- 15a,b: side edge
- 16: middle section
- 17: tip
- 18: attaching end 18
- 19: lower extension
- 20: upper extension
- 21: truck chassis
- 22: trailer chassis
- 23: top part

- 100: hopper
- 200: tipper truck
- 300: tipper trailer

- A: sloping angle
- B: canopy angle
- C: wall angle
- H: height
- L: longitudinal direction
- S: horizontal surface
- T: transverse direction
- X: horizontal level

## Claims

1. A hopper (100) for a tipper truck or tipper trailer, comprising
- a canopy part (1),
- a hopper part (2), and
- a headboard beam (3) between the canopy part (1) and the hopper part (2), wherein
- the headboard beam (3) is arranged to constitute a wall (4) that raises above an upper surface (5) of the canopy part between the canopy part (1) and the hopper part (2).

2. The hopper as claimed in claim 1, wherein
- the canopy part (1) is fixedly attached to the hopper part (2) .

3. The hopper as claimed in claim 1, wherein
- the canopy part (1) is detachably attached to the hopper part (2).

4. The hopper as claimed in claim 3, wherein
- the headboard beam (3) is an integral part of the hopper part (2), and
- the canopy part (1) is attached to the headboard beam (3).

5. The hopper as claimed in claim 4, wherein
- the canopy part (1) comprises a transverse flange (6) that is arranged in the transverse direction (T) and at an angle to the upper surface (5), and wherein
- the transverse flange (6) is detachably attached to the headboard beam (3).

6. The hopper as claimed in any of claims 3 - 5, wherein
- the canopy part (1) comprises longitudinal flanges (7a, 7b) arranged on both sides thereof, and wherein
- the longitudinal flanges (7a, 7b) are detachably attached to the hopper part (2).

7. The hopper as claimed in claim 6, wherein
- the longitudinal flanges (7a, 7b) are detachably attached to the headboard beam (3).

8. The hopper as claimed in claim 3, wherein
- the headboard beam (3) is integrated with the canopy part (1) such that it is detachable together with said canopy part from the hopper part (2).

9. The hopper as claimed in any of claims 3 - 8, comprising
- a vertically disposed beam (8) arranged to an outer side of a front section (9) of the hopper part, and
- a support leg (10) arranged to an underside (11) of the canopy part, wherein
- the support leg (10) is detachably attached to the vertically disposed beam (8).

10. The hopper as claimed in any of claims 3 - 9, wherein
- the canopy part (1) is attached to the hopper part (2) by bolts (12) or rivets.

11. The hopper as claimed in any of the preceding claims, wherein
- the headboard beam (3) extends X-Y mm above from the upper surface (5) of the canopy part.

12. The hopper as claimed in any of the preceding claims, wherein
- the headboard beam (3) extends from a first side (13a) to a second side (13b) of the hopper part.

13. The hopper as claimed in any of the preceding claims, wherein
- the upper surface (5) of the canopy part has a sloping surface (14a, 14b) arranged to slope towards at least one side edge (15a, 15b) of the canopy.

14. The hopper as claimed in claim 13, wherein
- the upper surface (5) of the canopy part has sloping surfaces (14a, 14b) arranged to slope towards both side edges (15a, 15b) of the canopy.

15. The hopper as claimed in claim 14, wherein
- the upper surface (5) comprises a middle section (16) not sloping towards the side edges (15a, 15b) arranged between two sloping surfaces (14a, 14b).

16. A tipper truck (200) comprising the hopper as claimed in any of the preceding claims.

17. A tipper trailer (300) comprising the hopper as claimed in any of claims 1 - 15.
